# EUROPEAN PATENT APPLICATION

(11) **EP 1 635 313 A2**
(43) Date of publication of application: **15.03.2006**
(21) Application number: 05255126.4
(22) Date of filing: 18.08.2005
(51) Int. Cl.: G09G 3/00

(54) **Foldable display device comprising a flexible display screen**

(30) Priority: 03.09.2004 JP 2004257184
(71) Applicant: FUJI PHOTO FILM CO., LTD., Minami-ashigara-shi, Kanagawa 250-0193 (JP)
(72) Inventor: Misawa, Atsushi, c/o Fuji Photo Film Co., Ltd., Asaka-shi, Saitama 351-8585 (JP)
(74) Representative: Stevens, Jason Paul

(57) **Abstract**

An image display apparatus (20) has two frames (121, 122) and a flexible image display screen (14).
The two frames are mutually closable and openable, and may be linked through a pivot (11). When the two frames are closed, the flexible image display screen is arranged inside the two frames, being folded into two with its part being curved. The image display screen is opened when the two frames are opened.

The image display apparatus can also comprise a unit (22), supported by one of the two frames so as to pivot freely between a housed position and a position in the use of the display screen. The housed position is where the unit is placed on the display screen. When the display screen is in use, the unit is moved outside the display screen. By turning the unit to the housed position and closing the two frames, the unit is further housed in the position sandwiched by the folded display screen. The unit may be a battery unit, a camera unit, a memory unit and so on.

## Description

### BACKGROUND OF THE INVENTION

### Field of the Invention

The present invention relates to an image display apparatus which displays an image.

### Description of the Related Art

Recently, there is a demand for a mobile phone with enhanced compactness and a bigger display screen. In order to meet such a demand which seems contradictory, there has been proposed a technique that an image is displayed on the whole of plural display screens which are closably and openably linked, thus realizing the function equivalent to an enlarged display screen (see Japanese Patent No. 2645306). Another technique has been proposed with the use of recent flexible display material such as organic EL display material that the flexible display material is rolled up in order to be put away while it is spread at the time of use in order to enlarge a display screen (see Japanese Patent Publication Nos. 2001-100661, 2003-309744).

However, although Japanese Patent No. 2645306 can enhance compactness by folding the plural display screens, it has a defect in that when an image is displayed on the whole of plural display screens there are linear missing parts on the displayed image at the border of adjacent display screens.

In addition, Japanese Patent Publication Nos. 2001-100661, 2003-309744 still require space to spread flexible display material which has been rolled up. Therefore, compactness cannot be improved solely by the mechanism of rolling up the flexible display material. Furthermore, although Japanese Patent Publication No. 2003-309744 describes that the flexible display material can be rolled up to be an extremely small-diameter roll, it is difficult for the flexible display material to become as flexible as a thin film.

### SUMMARY OF THE INVENTION

In view of the above circumstances, the present invention provides (at least in its preferred embodiments) an image display apparatus which realizes high level of compactness and enlarges a display screen to a great extent at the same time.

The present invention provides an image display apparatus having:
a cover having two frames which are mutually closable and openable; and
a flexible display screen displaying an image which is arranged inside the two frames when they are closed, which is folded into two with its part being curved when the two frames are closed, and which is opened when the two frames are opened.

As the image display apparatus has the two frames which are openable and closable, it can become more compact by closing the two frames and can realize a seamless display screen across the two frames when they are opened.

The above image display apparatus preferably has a unit connected to the cover, the unit being housed in the position sandwiched by the folded display screen and being capable of moving outside the display screen when the two frames are opened.

The display screen is flexible but is folded into two with its part being curved without putting any crease on the display screen. Therefore space is created in the centre inside the folded display screen. By arranging the unit in the space, the space is utilized enhancing compactness and portability.

The unit may have a battery which supplies electricity to drive the display screen, a driving circuit to drive the display screen, a camera which catches object light to generate an image signal, or an operation section to input instructions.

In addition, the display screen may be supported at both ends thereof by the cover so as to be substantially flat when the two frames are opened, or may be supported at the centre thereof by the cover so as to be substantially flat when the two frames are opened.

Accordingly, the present invention can provide the image display apparatus with a high level of portability and enlarged display screen.

Moreover, the image display apparatus of the present invention does not put any crease or broken line on the display screen, making it easy to see. When it is carried, the display screen is vulnerable due to its structure. But with protection with the rigid frames can prevent the display screen from scratches and damage.

### BRIEF DESCRIPTION OF THE DRAWINGS

Preferred embodiments of the present invention will be described in detail by way of example only, based on the following figures, wherein:
Fig. 1 is an external view of an image display apparatus according to a first embodiment of the present invention;
Fig. 2 is a sectional view of the image display apparatus shown in Fig. 1 when it is opened;
Fig. 3 is a sectional view of the image display apparatus shown in Fig. 1 when it is closed;
Fig. 4 is an external perspective view of an image display apparatus according to a second embodiment of the present invention when it is opened;
Fig. 5 is a sectional view of the image display apparatus shown in Fig. 4 when it is closed;
Fig. 6 is an external perspective view of an image display apparatus when it is opened according to a third embodiment of the present invention;
Fig. 7 is a perspective view of the image display apparatus shown in Fig. 6 when it is closed;
Fig. 8 shows an image display apparatus when it is opened according to a fourth embodiment of the present invention;
Fig. 9 shows the image display apparatus when it is closed according to the fourth embodiment;
Fig. 10 shows an image display apparatus according to a fifth embodiment of the present invention;
Fig. 11 shows an example on how the image display apparatus according to the fifth embodiment is used;
Fig. 12 shows an image display apparatus according to a sixth embodiment of the present invention;
Fig. 13 shows an image display apparatus according to a seventh embodiment of the present invention;
Fig. 14 is a sectional view of an image display apparatus according to an eighth embodiment of the present invention;
Fig. 15 is a sectional view of an image display apparatus according to a ninth embodiment when it is opened;
Fig. 16 is a sectional view of the image display apparatus according to the ninth embodiment when it is closed;
Fig. 17 shows the image display apparatus according to the ninth embodiment viewed from the back side when it is on the way from a closed state to an open state;
Fig. 18 shows a vicinity of a thinner portion indicating the function of a spring member when two frames are opened;
Fig. 19 shows a vicinity of the thinner portion indicating the function of the spring member when two frames are closed;
Fig. 20 is a perspective view of an image display apparatus according to a tenth embodiment when it is opened;
Fig. 21 is a perspective view of the image display apparatus according to the tenth embodiment when it is closed;
Fig. 22 is a sectional view of an image display apparatus according to an eleventh embodiment when it is opened; and
Fig. 23 is a sectional view of the image display apparatus according to the eleventh embodiment when it is closed.

### DETAILED DESCRIPTION OF THE PREFERRED EMBODIMENTS

Embodiments of the present invention will be described below with reference to the drawings.

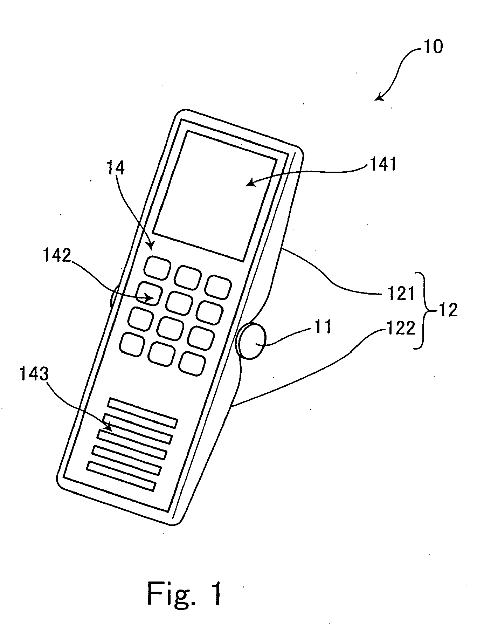

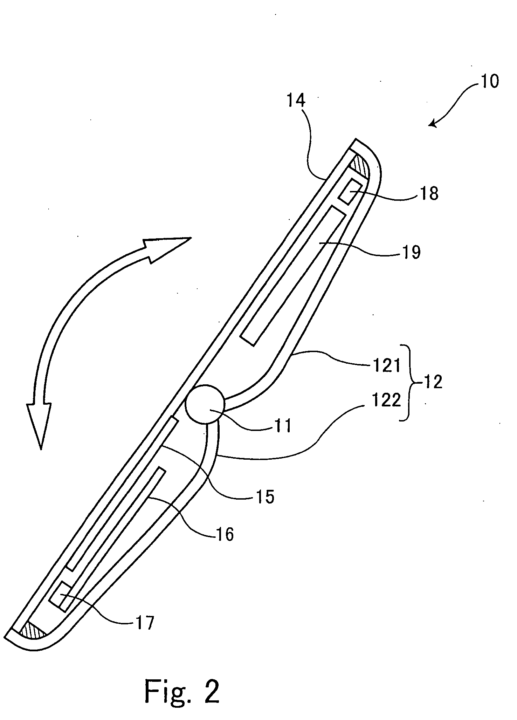

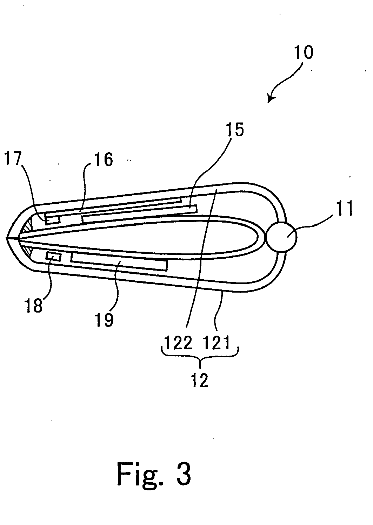

Fig. 1 is an external view of an image display apparatus according to a first embodiment of the present invention, Fig. 2 is a sectional view of the image display apparatus shown in Fig. 1 when it is opened, and Fig. 3 is a sectional view of the image display apparatus shown in Fig. 1 when it is closed.

An image display apparatus 10 can be used as a mobile phone. As shown in Fig. 1, the image display apparatus 10 is provided with a cover 12 having two frames 121 and 122 linked through a pivot 11 each of which is closable and openable. The cover 12 is made of hard material such as hard plastics to protect the image display apparatus. A display screen 14 is arranged inside the two frames 121 and 122 when they are closed so as to become flat being supported at the ends thereof by the two frames when they are opened. As shown in Fig. 1, the display screen 14 composes a screen 141, push buttons 142 and a menu image 143 which are part of the displayed image, but their appearances are similar to the counterparts of a conventional mobile phone. Disposed behind the push buttons 142 is a touch sensor 15 (see Fig. 2), which detects the touch of the button by a user's touching the displayed push buttons 142 with his or her finger.

As shown in Fig. 2, inside the image display apparatus 10 are incorporated a circuit board 16, a small microphone 17, a small sounding body or speaker 18 and a battery 19 as well as the touch sensor 15. The circuit board 16 is equipped with various circuit components to perform the function of a telephone and to control display of an image on the display screen 14. The small microphone 17 and the speaker 18 are for performing the function of a telephone and the battery 19 is for driving the circuit. The display screen 14 is flexible, and is, for example, formed by an organic EL display member.

The image display apparatus 10 is openable and closable around the pivot 11 in the direction indicated by the arrow in Fig. 2. Therefore, the image display apparatus 10 becomes very compact when it is closed, while it has the display screen 14 spread widely on the almost whole area of the inside thereof when it is opened.

When the two frames 121 and 122 are closed, the display screen 14 is folded into two by having its part close to the pivot 11 curved as shown in Fig. 3. The conventional technique that plural display screens are folded like being stacked and unfolded like being aligned horizontally has a problem in that there are linear missing parts on the image displayed on the display screen. However, by employing an almost flush display screen when it is spread, the problem can be solved.

Various embodiments are illustrated from now on, but the common description with the first embodiment is omitted and only distinctive features of each embodiment will be described.

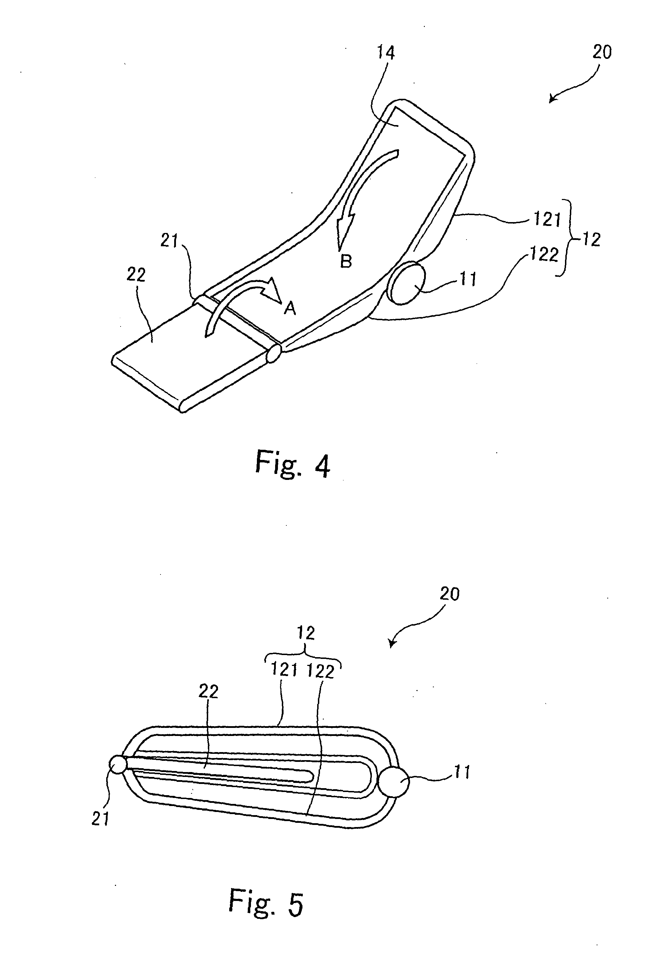

Fig. 4 is an external perspective view of an image display apparatus according to a second embodiment when it is opened and Fig. 5 is a sectional view of the image display apparatus shown in Fig. 4 when it is closed. In order to make it easy to understand, the same elements as those shown in Figs. 1 to 3 are designated with the same reference characters as those in Figs. 1 to 3 irrespective of minor difference in a form. The same is applied to the other embodiments.

As indicated in Fig. 4, an image display apparatus 20 according to a second embodiment has a battery unit 22. The battery unit 22 is pivotably supported by a pivot 21 relative to one frame 122 of the two frames that compose a cover 12. By employing the battery unit 22, it is possible to make the apparatus thinner and smaller by eliminating the battery 19 (see Fig. 2) incorporated in the apparatus according to the first embodiment. It is also possible to enhance battery capacity by adding the battery unit 22 to the battery unit 19.

The battery unit 22 in Fig. 4 can pivot between a housed position and a position in use. The housed position is where the battery unit 22 is placed on the display screen 14 after being pivoted in the direction of the arrow A shown in Fig. 4, while the position in use is where the battery unit is opened from the housed position. The battery unit 22 in the housed position is further housed by closing the frame 121 in the direction B, so that the battery unit 22 is sandwiched in the display screen 14 as shown in Fig. 5.

As mentioned before, the display screen 14 is folded with its part close to the pivot 11 curved, which creates space around the inside of the folded display screen. According to the second embodiment, the battery unit 22 is arranged in the space, thus enhancing compactness and portability when the display screen is folded.

In order to prevent scratches on the display screen, it is favourable to use material such as elastomer for the outer packaging of the battery unit 22, or to apply surface treatment with soft materials such as rubber coating. The same is true in each of the other units which will be described from now on.

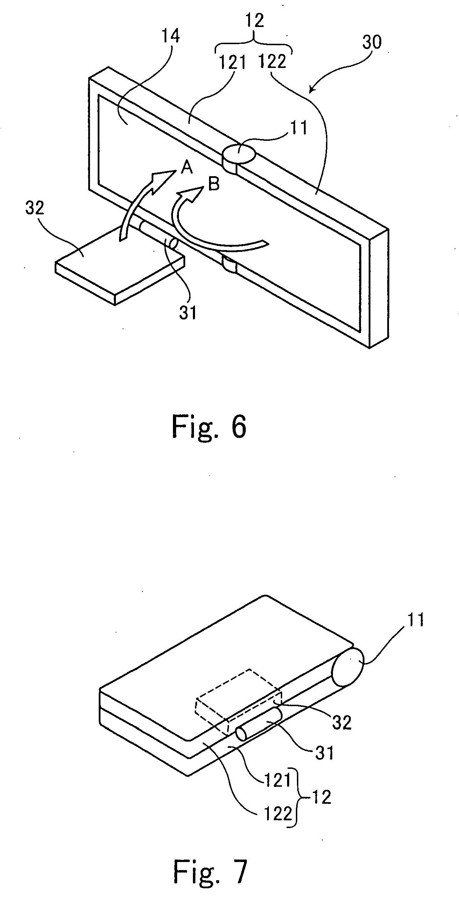

Fig. 6 is an external perspective view of an image display apparatus when it is opened according to a third embodiment of the present invention and Fig. 7 is a perspective view of the image display apparatus shown in Fig. 6 when it is closed.

The image display apparatus according to the third embodiment shown in Figs. 6 and 7 also has a battery unit 32 linked through a pivot 31 to the frame 121. According to the second embodiment the battery unit 22 is linked to the frame 122 through the pivot 21 which is parallel to the pivot 11, a link between the two frames 121 and 122 as shown in Fig. 4. However, in the image display apparatus 30 according to the third embodiment shown in Figs. 6 and 7, the battery unit 32 is linked to the side-edge of the frame 121 through the pivot 31 which is perpendicular to the pivot 11. Similarly to the second embodiment, the battery unit 32 according to the third embodiment can pivot between a housed position where it is placed on the display screen 14 by being pivoted in the direction of the arrow A and a position in use where it is opened from the display screen 14 as shown in Fig. 6. The battery unit 32 in the housed position is further housed by closing the frame 122 in the direction of the arrow B, so that the battery unit 32 is sandwiched in the display screen 14 as shown in Fig. 7.

The folding method according to the third embodiment also enhances compactness and portability.

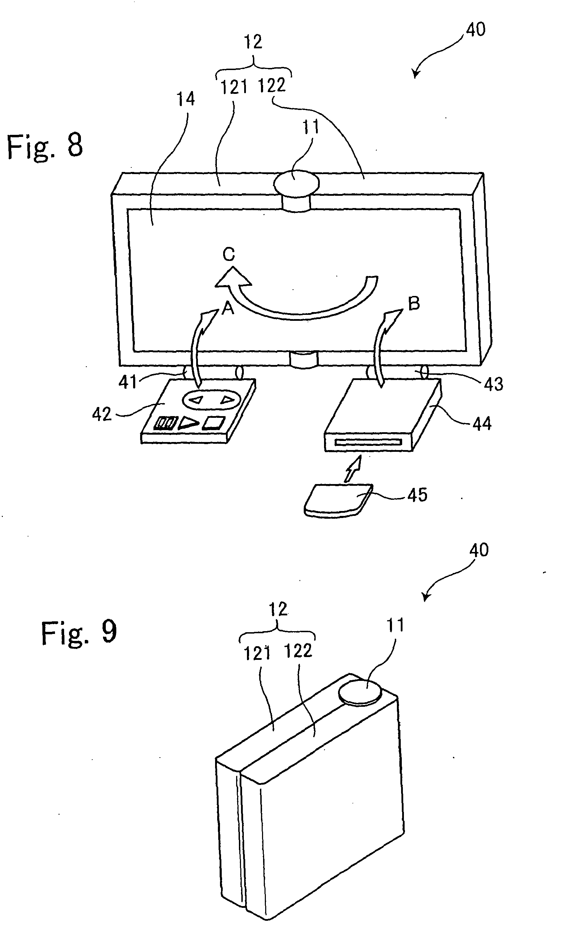

Fig. 8 shows an image display apparatus when it is opened according to a fourth embodiment of the present invention and Fig. 9 shows the image display apparatus when it is closed according to the fourth embodiment.

The image display apparatus 40 according to the fourth embodiment has an operation unit 42 and a memory drive unit 44. The operation unit 42 is connected to the side-edge of the frame 121 through a pivot 41 and the memory drive unit 44 is connected to the side-edge of the other frame 122 through a pivot 43. The operation unit 42 is provided with various operation buttons to input instructions to the image display apparatus 40. The memory drive unit 44, when loaded with a memory 45, captures the image stored in the memory 45. The captured image is displayed on the display screen 14.

The operation unit 42 and the memory drive unit 44 can pivot between a housed position where they are placed on the display screen 14 by being pivoted in the direction respectively indicated by the arrows A and B and a position in use where they are opened from the display screen 14 as shown in Fig. 8.

In the fourth embodiment, the display screen 14 can remain upright by opening the operation unit 42 and the memory drive unit 44 by 90 degrees relative to the display screen 14.

The operation unit 42 and the memory drive unit 44 which are placed on the display screen 14 after being pivoted respectively in the direction of the arrow A and arrow B, are further housed by closing the frame 122 in the direction of the arrow C, so that the operation unit 42 and the memory drive unit 44 are sandwiched in the display screen 14 as shown in Fig. 9.

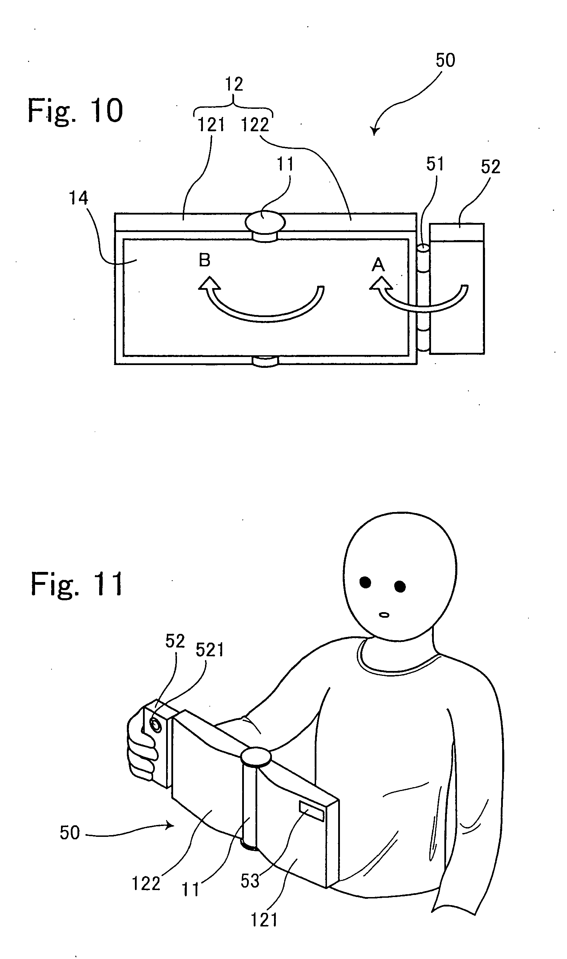

Fig. 10 shows an image display apparatus according to a fifth embodiment of the present invention and Fig. 11 shows an example on how the image display apparatus according to the fifth embodiment is used.

The image display apparatus 50 has a camera unit 52 which is connected to the end-edge of the frame 122 through a pivot 51.

The camera unit 52 is equipped with an image taking lens 521 through which object light is caught to generate an image signal in an image pickup device (not shown). In addition, the other frame 121 is provided with a flash emitter 53 emitting flash at the time of shooting, thus enabling shooting even in a dark place.

The display screen 14 displays an image based on the image signal obtained by shooting using the camera unit 52.

The camera unit 52 can pivot between a housed position where it is placed on the display screen 14 by being pivoted in the direction of the arrow A and a position in use where it is opened from the housed position as shown in Fig. 10. The camera unit 52 in the housed position is further housed by closing the frame 122 in the direction of the arrow B, so that the camera unit 52 is sandwiched in the display screen 14, which is almost similar to the state shown in Fig. 9.

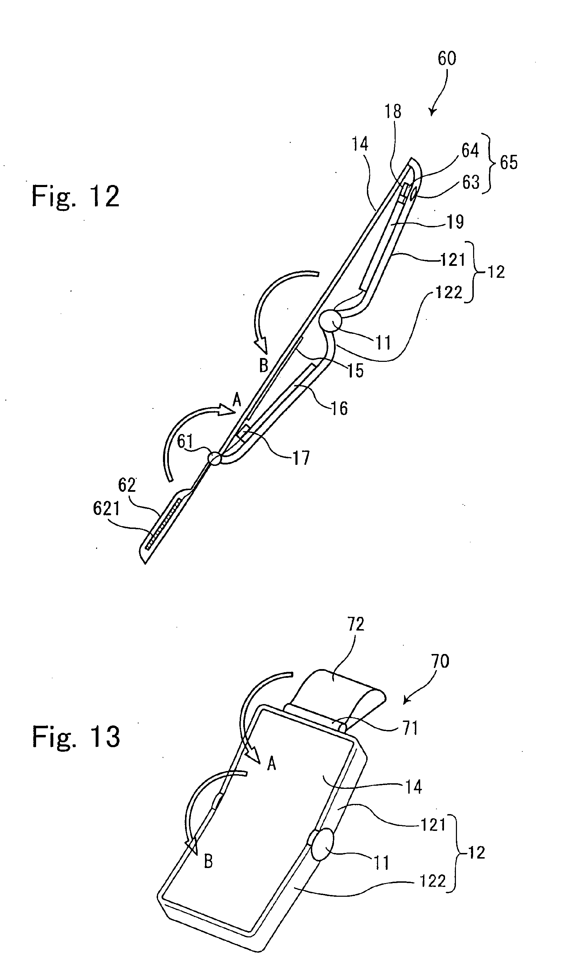

Fig. 12 shows an image display apparatus according to a sixth embodiment of the present invention.

The image display apparatus 60 according to the sixth embodiment has a drive unit 62 connected to the end-edge of the frame 122 through a pivot 61. The drive unit 62 has a built-in driving circuit 621 whose function is to drive the display screen 14, together with various circuits loaded into the circuit board 16 in order to display various images on the display screen 14. Fig. 12 also shows a camera unit 65 consisting of an image taking lens 63 and an image pickup device 64 which are loaded into the frame 121.

The drive unit 62 can pivot between a housed position where it is placed on the display screen 14 by being pivoted in the direction of the arrow A and a position in use where it is opened from the housed position as shown in Fig. 12. The drive unit 62 in the housed position is further housed by closing the frame 121 in the direction of the arrow B, so that the drive unit 62 is sandwiched in the display screen 14, which is almost similar to the state shown in Fig. 3.

Fig. 13 shows an image display apparatus according to a seventh embodiment of the present invention.

The image display apparatus 70 according to the seventh embodiment has a GPS (Global Positioning System) antenna unit 72 equipped with the antenna for GPS which is connected to the end-edge of the frame 121 though a pivot 71. In the image display apparatus 70 according to the seventh embodiment, the display screen 14 displays a map indicating a position of the apparatus 70 after receiving information for the position from the GPS.

The GPS antenna unit 72 can pivot between a housed position where it is placed on the display screen 14 by being pivoted in the direction of the arrow A and a position in use where it is opened from the housed position as shown in Fig. 13. The GPS antenna unit 72 in the housed position is further housed by closing the frame 121 in the direction of the arrow B, so that the GPS antenna unit 72 is sandwiched in the display screen 14, which is almost similar to the state shown in Fig. 9.

As mentioned in the above, various units according to the second embodiment through the seventh embodiment are housed being sandwiched in the display screen 14. However, the unit according to the present invention is not limited to such embodiments and may have another function.

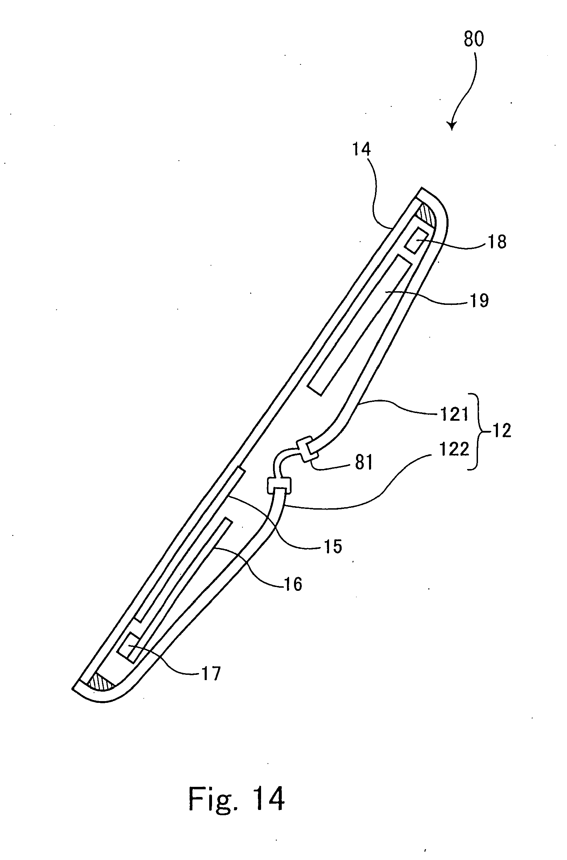

Fig. 14 is a sectional view of an image display apparatus according to an eighth embodiment of the present invention.

In the image display apparatus 10 according to the first invention shown in Figs. 1 to 3, the two frames 121 and 122 composing the cover 12 are linked through the pivot 11. On the other hand, in the image display apparatus 80 according to the eighth embodiment, the two frames 121 and 122 are mutually linked with an elastic member 81 as shown in Fig. 14.

In this way in the present invention the two frames may be linked with an elastic member instead of a pivot.

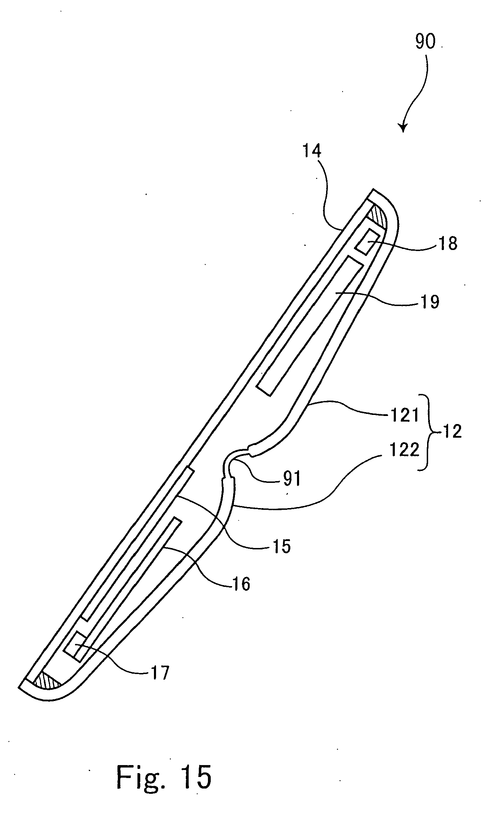

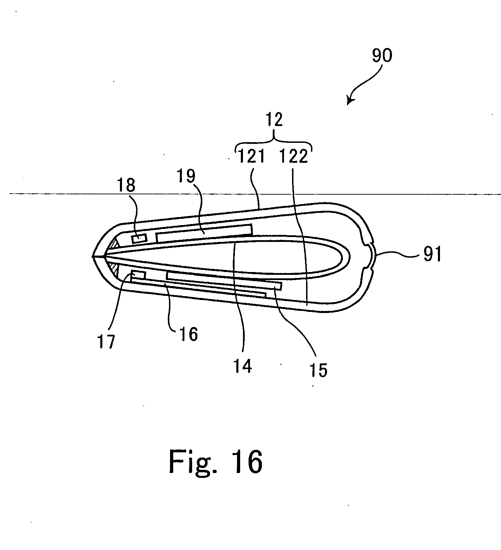

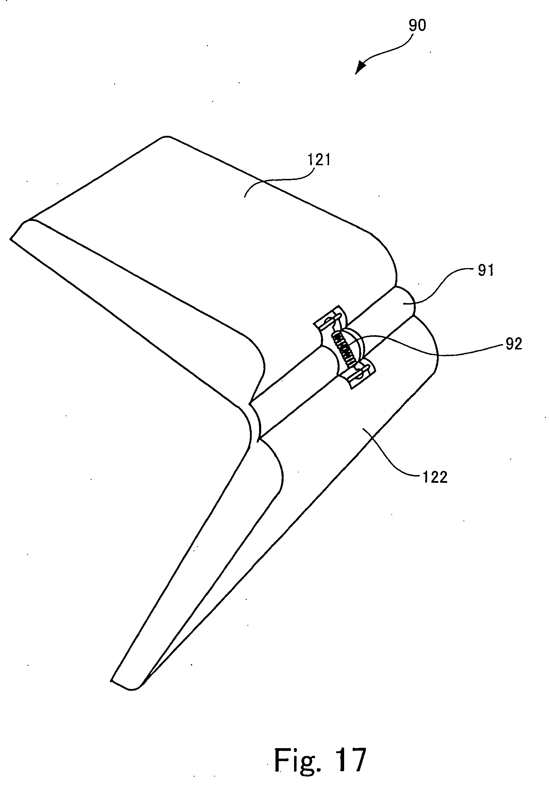

Fig. 15 is a sectional view of an image display apparatus according to a ninth embodiment when it is opened, Fig. 16 is a sectional view of the image display apparatus according to the ninth embodiment when it is closed, and Fig. 17 shows the image display apparatus according to the ninth embodiment viewed from the back side when it is on the way from a closed state to an open state.

In the image display apparatus 90 shown in Figs. 15 to 17, the two frames 121 and 122 are linked through a thinner portion 91 whose wall thickness is thinner compared to that of the frames 121 and 122.

As shown in the image display apparatus 90 according to the ninth embodiment, the two frames 121 and 122 may be linked with the thinner portion 91 so as to be openable and closable, instead of the pivot 11 of the image display apparatus 10 according to the first embodiment shown in Fig. 1 to 3, or instead of the elastic member 81 of the image display apparatus 80 according to the eighth embodiment shown in Fig. 14.

The image display apparatus 90 according to the ninth embodiment also has a spring member 92 connected to the two frames 121 and 122 across the thinner portion 91.

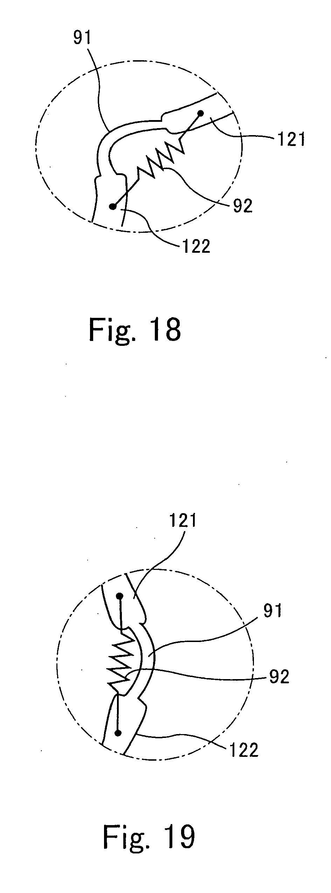

Fig. 18 shows a vicinity of the thinner portion 91 indicating the function of the spring member 92 when two frames are opened and closed.

When the two frames 121 and 122 are opened, the spring member 92 is arranged outside the thinner portion 91, maintaining the opening state of the two frames. When the two frames 121 and 122 are closed, the spring member 92 is arranged inside the thinner portion 91, maintaining the closing state of the two frames. Accordingly employing the spring member 91 can make the image display apparatus 90 stable both in opening and closing state.

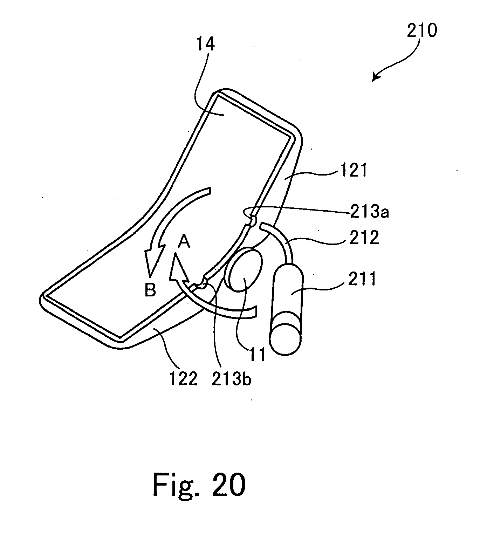

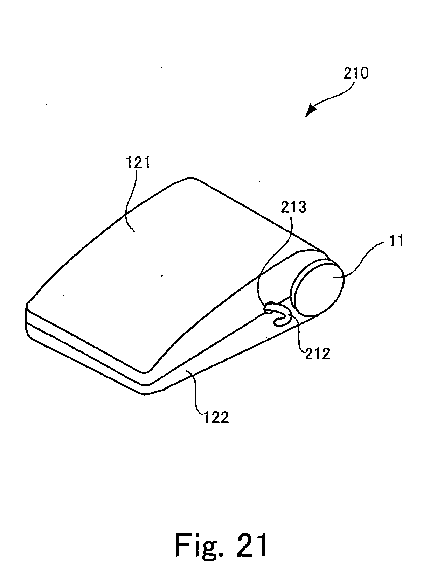

Fig. 20 and Fig. 21 respectively show a perspective view of an image display apparatus when it is opened and closed according to a tenth embodiment.

As shown in Fig. 20, the image display apparatus 210 has a battery 211 connected to the frame 121 by a cable 212. The two frames 121 and 122 are respectively provided with notches 213a and 213b which together form a circular hole 213 (see Fig. 21) when the two frames are closed.

When the image display apparatus 210 is shifted from the open state in Fig. 20 to the closed state in Fig. 21, the battery 211 is first placed on the display screen 14 by putting the cable 212 on the notch 213b, and then the frame 121 is closed in the direction of the arrow B. In this way the battery 211 is arranged in space created when the display screen 14 is folded, thus realizing portability and compactness.

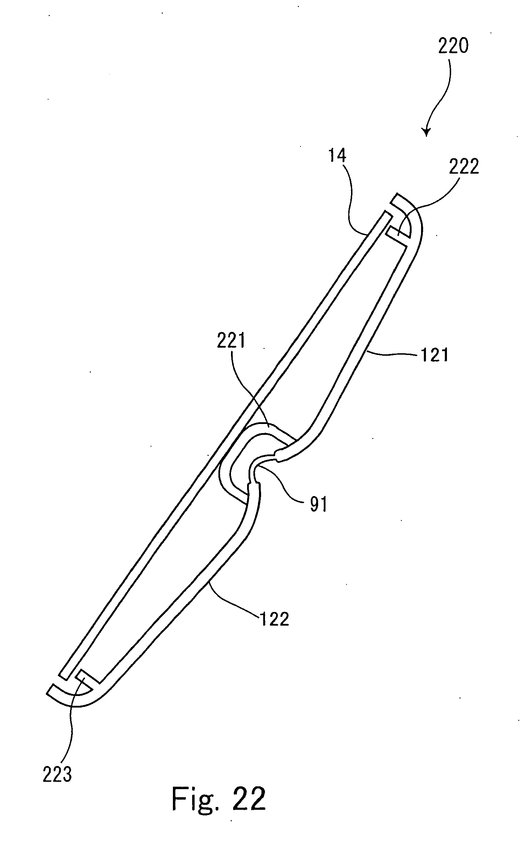

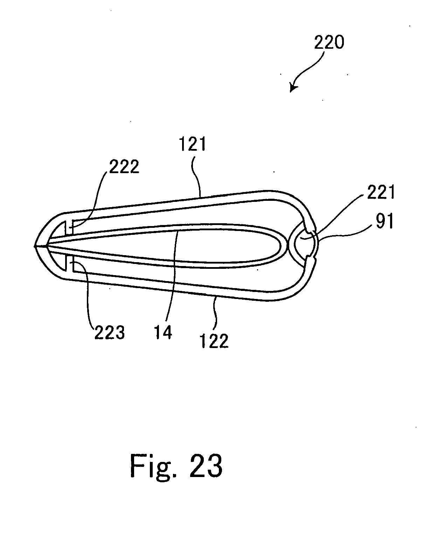

Fig. 22 and Fig. 23 each show a sectional view of an image display apparatus according to an eleventh embodiment respectively when it is opened and closed.

In the image display apparatus 10 according to the first embodiment shown in Figs. 1 to 3, the display screen 14 is supported at the both ends thereof by the cover 12 (composing two frames 121 and 122). On the other hand, in the image display apparatus 220 according to the eleventh embodiment, the display screen 14 is supported at the center thereof and attached by a retaining member 221. The retaining member 221 is formed in the vicinity of the thinner portion 91 connecting the two frames 121 with 122 and each of its both ends are fixed to one of the two frames 121 and 122. The image display apparatus 220 is further provided with retaining bosses 222 and 223 formed at the ends of the display screen 14 for supporting the ends. The display screen 14 is not fixed to the retaining bosses 222 and 223, but is configured so as to be put on the retaining bosses 222 and 223 by its rigidity to remain flat while it is opened. In this way the display screen 14 may be supported at the center thereof as in the eleventh embodiment shown in Figs. 22 and 23 while the display screen 14 may also be supported at the ends thereof as in the first embodiment shown in Figs. 1 to 3.

## Claims

1. An image display apparatus (10, 20, 30, 40, 50, 60, 70, 80, 90, 210, 220) comprising:
a cover (12) having two frames (121, 122) which are mutually closable and openable; and
a flexible display screen (14) displaying an image which is arranged inside the two frames when they are closed, which is folded into two with its part being curved when the two frames are closed, and which is opened when the two frames are opened.

2. The image display apparatus (20, 30, 40, 50, 60, 70, 80, 90, 210, 220) according to claim 1, further comprising a unit (22, 32, 42, 44, 52, 62, 72, 211) connected to the cover (12), the unit being housed in the position sandwiched by the folded display screen (14) and being capable of moving outside the display screen when the two frames (121, 122) are opened.

3. The image display apparatus according to claim 2, wherein the unit (22, 32, 211) has a battery which supplies electricity to drive the display screen (14).

4. The image display apparatus according to claim 2, wherein the unit (62) has a driving circuit (621) to drive the display screen (14).

5. The image display apparatus according to claim 2, wherein the unit (52) has a camera which catches object light to generate an image signal.

6. The image display apparatus according to claim 2, wherein the unit (42) has an operation section to input instructions.

7. The image display apparatus according to claim 1, wherein the display screen (14) is supported at both ends thereof by the cover (12) so as to be substantially flat when the two frames (121, 122) are opened.

8. The image display apparatus according to claim 1, wherein the display screen (14) is supported at the center thereof by the cover (12) so as to be substantially flat when the two frames (121, 122) are opened.
